# EUROPEAN PATENT SPECIFICATION

(11) **EP 1 312 255 B1**
(45) Date of publication and mention of the grant of the patent: **31.05.2006**
(21) Application number: 01127654.0
(22) Date of filing: 20.11.2001
(51) Int. Cl.: A01G 31/00, C05D 1/02, C05G 3/00

(54) **Culture solution for plant cultivation and preparation method of the same**
Nährlösung für Pflanzenzucht und Vorbereitungsverfahren dieser Lösung
Solution nutritive pour la culture de plantes et méthode de préparation de cette solution

(43) Date of publication of application: 21.05.2003
(73) Proprietor: HOSHIZAKI DENKI KABUSHIKI KAISHA, Toyoake-shi, Aichi-ken (JP)
(72) Inventor: Achiwa, Nobuo, Tokai-shi, Aichi-ken (JP); Kobayashi, Rie, Aichi-ken (JP)
(74) Representative: Kramer - Barske - Schmidtchen

(56) References cited:
- US-A- 4 152 215
- US-A- 5 928 491
- PATENT ABSTRACTS OF JAPAN vol. 2002, no. 03, 3 April 2002 (2002-04-03) -& JP 2001 320990 A (HOSHIZAKI ELECTRIC CO LTD), 20 November 2001 (2001-11-20)
- PATENT ABSTRACTS OF JAPAN vol. 1999, no. 10, 31 August 1999 (1999-08-31) & JP 11 128936 A (HOSHIZAKI ELECTRIC CO LTD), 18 May 1999 (1999-05-18)

## Description

The present invention relates to a culture solution for plant cultivation and a preparation method of the culture solution.

Culture solution containing fertilizer components effective for water cultivation of plant is prepared by diluting a mixture of plural fertilizer components with ordinary water such as city service water. Although in water cultivation of plant, effective components contained in the culture solution are utilized for growth of the plant, it is required to prepare culture solutions of different properties in accordance with cultivation manner of the plant. For example, it is required to prepare the culture solution for growth promotion of the plant and to prepare the culture solution for growth restraint of the plant for supplying a large amount of nutriment to fruits of the plant at its mature stage.

It is, therefore, a primary object of the present invention to provide culture solution for plant cultivation and a preparation method of the culture solution capable of satisfying the requirements described above.

According to the present invention, the object is attained by providing a culture solution prepared by diluting fertilizer components effective for plant cultivation with electrolyzed water produced by electrolysis of solution of potassium chloride.

In preparation of the culture solution, it is desirable to use electrolyzed alkaline water of 11.0 ~ 12.00 pH as the electrolyzed water for growth promotion of the plant. Alternatively, electrolyzed acidic water of 2.0 ~ 3.0 pH may be used as the electrolyzed water for growth restraint of the plant.

In a preparation method of the culture solution for plant cultivation, electrolyzed alkaline water produced by electrolysis of solution of potassium chloride is diluted six times with ordinary water such as city service water, and the fertilizer components effective for plant are diluted with the diluted electrolyzed alkaline water. Alternatively, the electrolyzed alkaline water is diluted twenty times to forty times with the ordinary water, and the fertilizer components effective for plant is diluted with the diluted electrolyzed alkaline water.

For a better understanding of the present invention, and to show how the same may be carried into effect, reference will now be made, by way of example, to the accompanying drawings, in which:
Fig. 1(a) is a graph showing a growth transition of stalk diameter of tomatoes cultivated in use of various kinds of culture solutions in a first experimental cultivation of tomatoes;
Fig. 1(b) is a graph showing a growth transition of leaf length of the tomatoes in the first experimental cultivation;
Fig. 2(a) is a graph showing a growth transition of leaf width of the tomatoes in the first experimental cultivation;
Fig. 2(b) is a graph showing a growth transition of leaf height of the tomatoes in the first experimental cultivation;
Fig. 3(a) is a graph showing a growth transition of stalk diameter of tomatoes cultivated in use of various kinds of culture solutions in a second experimental cultivation of tomatoes;
Fig. 3(b) is a graph showing a growth transition of leaf length of the tomatoes in the second experimental cultivation;
Fig. 4(a) is a graph showing a growth transition of leaf width of the tomatoes in the second experimental cultivation;
Fig. 4(b) is a graph showing a growth transition of leaf height of the tomatoes in the second experimental cultivation;
Fig. 5(a) is a graph showing a growth transition of stalk diameter of tomatoes cultivated in use of various kinds of culture solution in a third experimental cultivation of tomatoes;
Fig. 5(b) is a graph showing a growth transition of leaf length of the tomatoes in the third experimental cultivation;
Fig. 6(a) a graph showing a growth transition of leaf width of the tomatoes in the third experimental cultivation; and
Fig. 6(b) is a graph showing a growth transition of leaf height of the tomatoes in the third experimental cultivation.

In a preferred embodiment of the present invention, an amount of compound fertilizer containing ammonia nitrogen (AN), nitrogen nitrate (NN), phosphoric acid (P₂O₅), potassium (K₂O), manganese (MnO), boron (B₂O₃), iron (Fe), copper (Cu) and molybdenum (Mo) was diluted respectively with city service water of 7.1 pH, electrolyzed alkaline water of 11.5 pH and electrolyzed acidic water of 2.5 pH to prepare plural kinds of culture solutions for experimental cultivation of tomato (named Momotaro York variety). The electrolyzed alkaline water and acidic water were produced by electrolysis of aqueous solution of about 0.1 wt. % potassium chloride respectively in cathode and anode chambers of an electrolytic cell.

In the experimental cultivation, seed of the tomato was sowed in the ground of vermiculite and cultivated on the nursery bed of vermiculite for seven days. Thereafter, the seedlings of tomato were transplanted to a cultivation container filled with culture solutions for water cultivation placed under fluorescent and cultivated for about one month. (see Examples 1 and 2 describe later) During the cultivation of the seedlings of the tomato, the temperature, illumination (intensity of the fluorescent) and humidity of the cultivation container for every twenty four hours were controlled as shown in the following table 1, and each culture solution in the container was supplied with air by means of an air pump of small size for five minutes at an interval of thirty minutes.

**Table 1 Control condition of the cultivation container:**

| Time (hr) | Temp. (°C) | Illumination (L) | Humidity |
|---|---|---|---|
| 0~4 | 25 | 3 | 70 |
| 4~12 | 25 | 5 | 70 |
| 12~16 | 25→15 | 5 | 70 |
| 16~24 | 15 | 0 | OFF |

When a predetermined period of time lapsed during the water cultivation, each growing condition of the seedlings of the tomato was observed to measure the stalk diameter, plant length, leaf length and leaf width of the tomato for comparison of the growing conditions of the tomato cultivated in each container.

### Example 1:

In a first experimental cultivation, the city service water (a), electrolyzed alkaline water (b) diluted six times with the city service water, electrolyzed alkaline water (c) diluted ten times with the city service water, electrolyzed alkaline water (d) diluted twenty times with the city service water, solution of potassium chloride (e) diluted ten times with the city service water and solution of potassium chloride (f) diluted twenty times with the city service water were used to prepare culture solutions (1) - (6). The properties of the culture solutions are shown in the following table 2.

**Table 2 Property of Culture solution:**

| Property | Culture solution | | | | | |
|---|---|---|---|---|---|---|
| | 1 | 2 | 3 | 4 | 5 | 6 |
| Solution for preparation | a | b | c | d | e | f |
| Conductivity (mS/cm) | 2.30 | 2.55 | 2.48 | 2.30 | 2.40 | 2.42 |
| pH | 5.85 | 6.56 | 6.36 | 6.18 | 5.85 | 5.78 |
| NH₄-N (ppm) | 29.0 | 25.5 | 24.9 | 26.3 | 2.61 | 25.7 |
| NO₃-N (ppm) | 203.3 | 202.0 | 206.9 | 197.8 | 200.6 | 202.1 |
| P₂O₅ (ppm) | 116.3 | 116.2 | 120.4 | 115.2 | 113.9 | 116.1 |
| K₂O (ppm) | 403.6 | 523.2 | 481.7 | 414.2 | 468.5 | 424.7 |
| CaO (ppm) | 220.5 | 220.3 | 228.1 | 218.3 | 217.8 | 21.8 |
| MgO (ppm) | 75.4 | 75.4 | 78.0 | 73.8 | 73.8 | 74.3 |
| MnO (ppm) | 2.00 | 1.99 | 2.08 | 1.99 | 1.99 | 2.02 |
| B₂O₃ (ppm) | 2.11 | 2.10 | 2.15 | 2.05 | 2.05 | 2.08 |
| Fe (ppm) | 2.32 | 2.24 | 2.38 | 2.26 | 2.24 | 2.27 |
| Cu (ppm) | 0.04 | 0.03 | 0.03 | 0.03 | 0.03 | 0.03 |
| Zn (ppm) | 0.09 | 0.12 | 0.09 | 0.09 | 0.09 | 0.10 |
| Mo (ppm) | 0.03 | 0.01 | Tr | Tr | 0.01 | 0.01 |
| Na (ppm) | 6.5 | 7.6 | 7.2 | 6.7 | 5.7 | 5.4 |
| Cl (ppm) | 11.5 | 74.6 | 44.0 | 25.9 | 56.4 | 28.8 |
| SO₄ (ppm) | 143.5 | 144.6 | 148.2 | 142.8 | 139.5 | 143.3 |

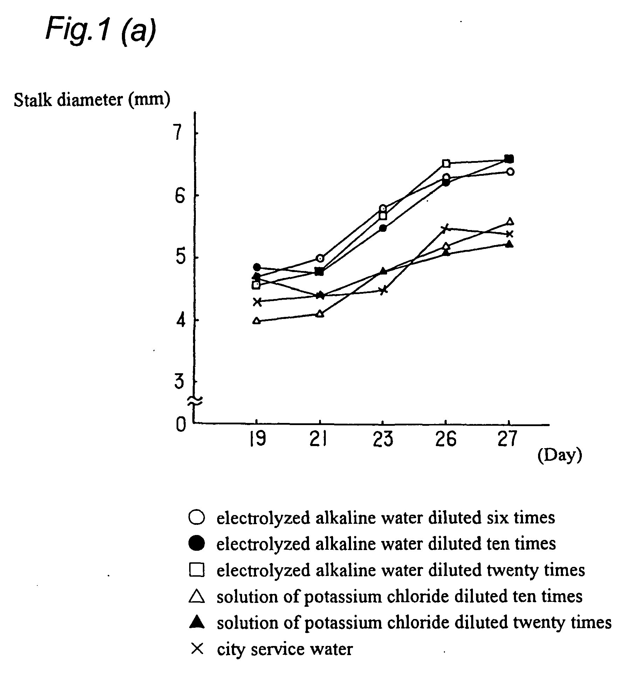

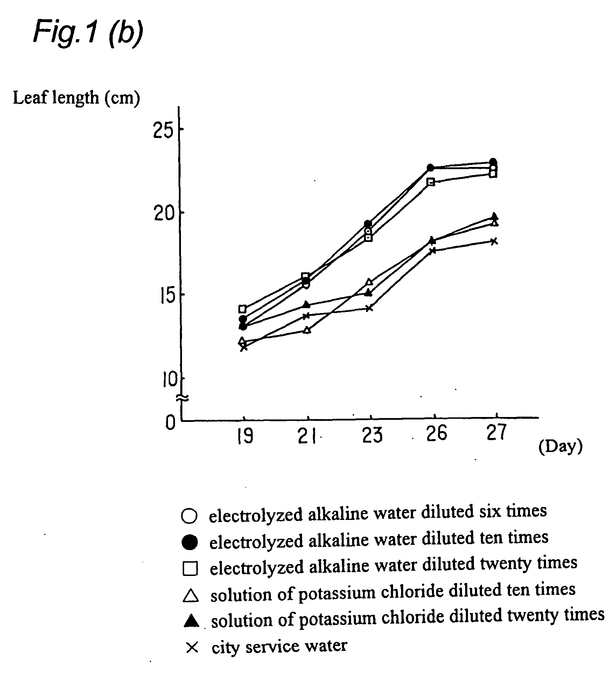

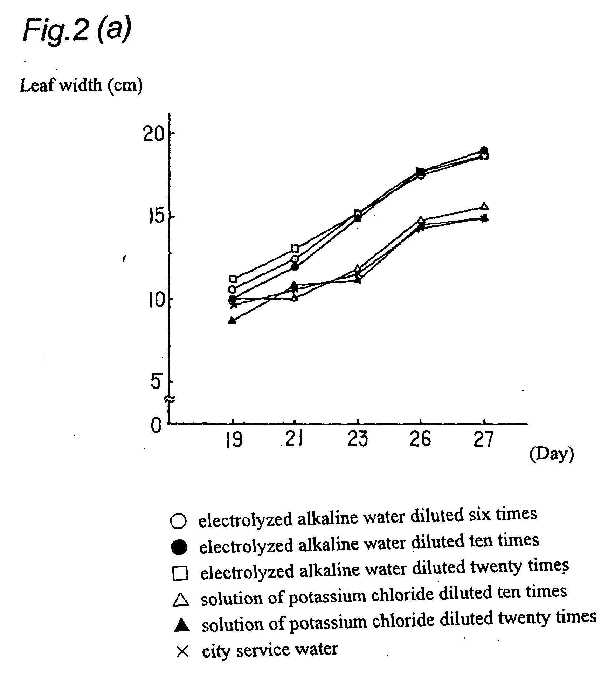

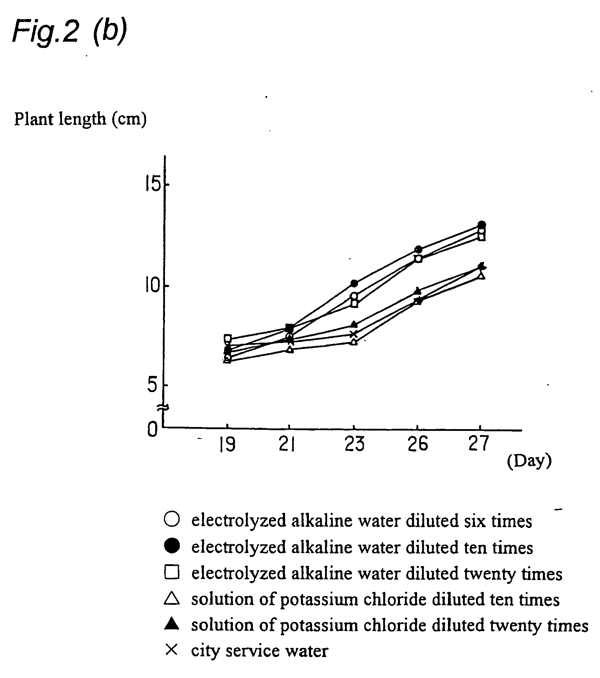

The culture solutions (1) - (6) were used to cultivate the tomatoes for twenty seven days in a condition described above. Thus, the stalk diameter, leaf length, leaf width and plant length of grown tomatoes were measured to confirm each growth transition of the tomatoes. A result of the measurement is shown in the following tables 3 - 6, and each growth transition of the tomatoes is shown in Figs. 1 and 2. Provided that, each value in the tables represents an average value of twelve stocks.

From the growth transition of the tomatoes, it has been confirmed that the culture solution prepared by the electrolyzed alkaline water is effective more than a conventional culture solution prepared by the city service water to promote growth of the tomato. Particularly, it has been found that the electrolyzed alkaline water diluted six times to twenty times with the city service water is desirable for preparation of the culture solution.

**Table 3 Growing condition (Stalk diameter: mm)**

| Cultivation Days | Culture solution | | | | | |
|---|---|---|---|---|---|---|
| | 1 | 2 | 3 | 4 | 5 | 6 |
| 19 | 4.24 | 4.68 | 4.83 | 4.58 | 3.96 | 4.66 |
| 21 | 4.38 | 4.97 | 4.79 | 4.80 | 4.08 | 4.35 |
| 23 | 4.52 | 5.83 | 5.51 | 5.73 | 4.75 | 4.73 |
| 26 | 5.50 | 6.28 | 6.29 | 6.48 | 5.22 | 5.11 |
| 27 | 5.38 | 6.39 | 6.56 | 6.56 | 5.55 | 5.20 |

**Table 4 Growing condition (Leaf length: cm)**

| Cultivation Days | Culture solution | | | | | |
|---|---|---|---|---|---|---|
| | 1 | 2 | 3 | 4 | 5 | 6 |
| 19 | 11.73 | 13.04 | 13.29 | 14.13 | 11.00 | 13.17 |
| 21 | 13.73 | 15.42 | 15.50 | 15.92 | 12.67 | 14.25 |
| 23 | 14.04 | 18.75 | 18.92 | 18.50 | 14.83 | 15.58 |
| 26 | 17.67 | 22.33 | 22.29 | 21.67 | 18.25 | 18.25 |
| 27 | 18.25 | 22.42 | 22.67 | 22.33 | 19.08 | 19.50 |

**Table 5 Growing condition (Leaf width: cm)**

| Cultivation Days | Culture solution | | | | | |
|---|---|---|---|---|---|---|
| | 1 | 2 | 3 | 4 | 5 | 6 |
| 19 | 9.64 | 10.67 | 10.13 | 11.17 | 8.58 | 9.92 |
| 21 | 10.55 | 12.58 | 12.25 | 12.92 | 10.25 | 10.92 |
| 23 | 11.58 | 15.08 | 14.96 | 15.08 | 12.00 | 11.58 |
| 26 | 14.33 | 17.58 | 17.83 | 17.83 | 14.58 | 14.42 |
| 27 | 14.92 | 18.75 | 18.83 | 18.67 | 15.83 | 14.83 |

**Table 6 Growing condition (Plant length: cm)**

| Cultivation Days | Culture solution | | | | | |
|---|---|---|---|---|---|---|
| | 1 | 2 | 3 | 4 | 5 | 6 |
| 19 | 7.05 | 6.46 | 6.83 | 7.17 | 6.50 | 6.75 |
| 21 | 7.18 | 7.50 | 7.75 | 7.79 | 6.79 | 7.33 |
| 23 | 7.67 | 8.67 | 9.21 | 8.96 | 7.38 | 8.04 |
| 26 | 9.17 | 11.29 | 11.71 | 11.29 | 9.17 | 9.58 |
| 27 | 10.88 | 12.71 | 12.92 | 12.25 | 10.42 | 10.83 |

### Example 2

In a second experimental cultivation, the city service water (a), electrolyzed acidic water (b) diluted twenty times with the city service water, solution of potassium chloride (c) diluted ten times with the city service water, solution of potassium chloride (d) diluted fourteen times with the city service water and solution of potassium chloride (e) diluted forty times with the city service water were used to prepare culture solutions (1) - (5). The properties of the culture solutions are shown in the following table 7.

**Table 7 Property of culture solution**

| Property | Culture solution | | | | |
|---|---|---|---|---|---|
| | 1 | 2 | 3 | 4 | 5 |
| Solution for preparation | a | b | c | d | e |
| Conductivity (mS/cm) | 2.30 | 2.37 | 2.51 | 2.49 | 2.41 |
| pH | 5.85 | 4.10 | 5.41 | 5.40 | 5.38 |
| NH₄-N (ppm) | 29.0 | 27.4 | 28.0 | 29.5 | 28.8 |
| NO₃-N (ppm) | 203.3 | 200.3 | 207.8 | 212.4 | 209.0 |
| P₂O₅ (ppm) | 116.3 | 121.6 | 123.4 | 126.0 | 123.6 |
| K₂O (ppm) | 403.6 | 456.2 | 510.4 | 503.4 | 470.8 |
| CaO (ppm) | 220.5 | 232.9 | 232.6 | 240.2 | 234.5 |
| MgO (ppm) | 75.4 | 78.8 | 79.5 | 79.5 | 80.3 |
| MnO (ppm) | 2.00 | 2.10 | 2.13 | 2.19 | 2.14 |
| B₂O₃ (ppm) | 2.11 | 2.18 | 2.23 | 2.27 | 2.22 |
| Fe (ppm) | 2.32 | 2.60 | 2.55 | 2.62 | 2.57 |
| Cu (ppm) | 0.04 | 0.04 | 0.04 | 0.04 | 0.04 |
| Zn (ppm) | 0.09 | 0.10 | 0.10 | 0.10 | 0.10 |
| Mo (ppm) | 0.03 | 0.03 | 0.03 | 0.02 | 0.02 |
| Na (ppm) | 6.5 | 5.1 | 5.2 | 5.4 | 5.2 |
| Cl (ppm) | 11.5 | 29.1 | 49.8 | 38.1 | 16.1 |
| SO₄ (ppm) | 143.5 | 129.1 | 136.6 | 139.4 | 134.6 |

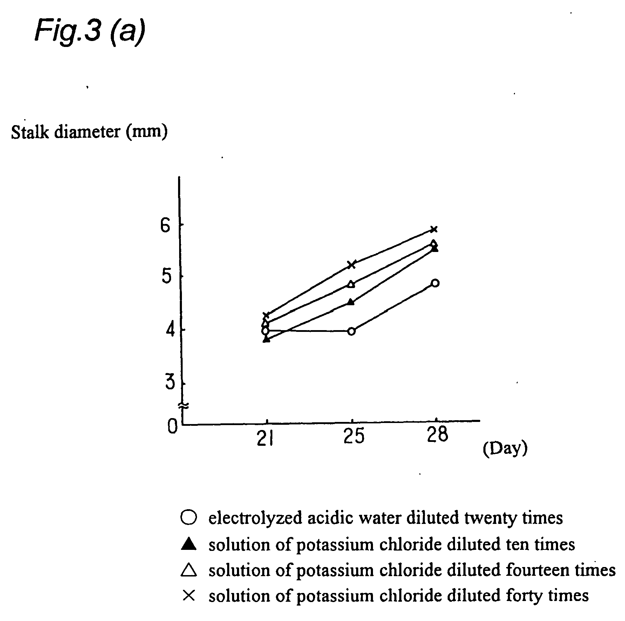

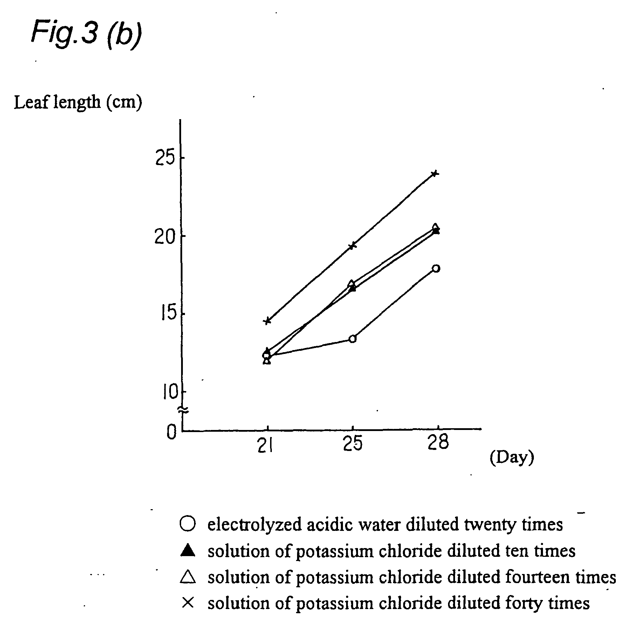

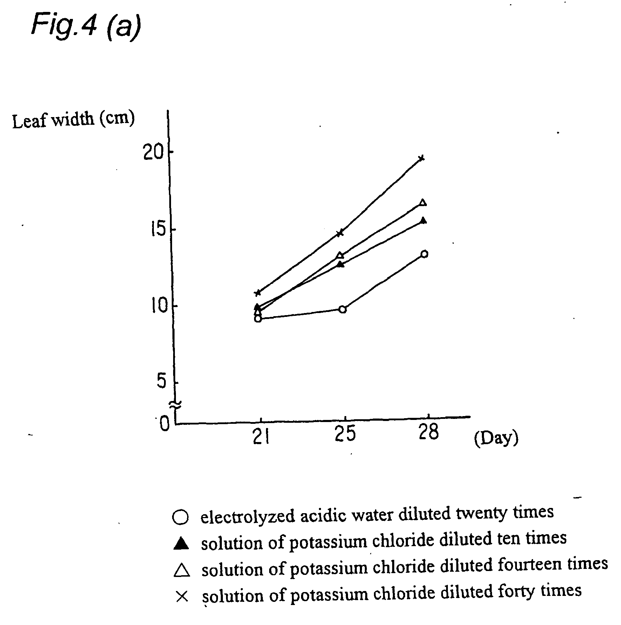

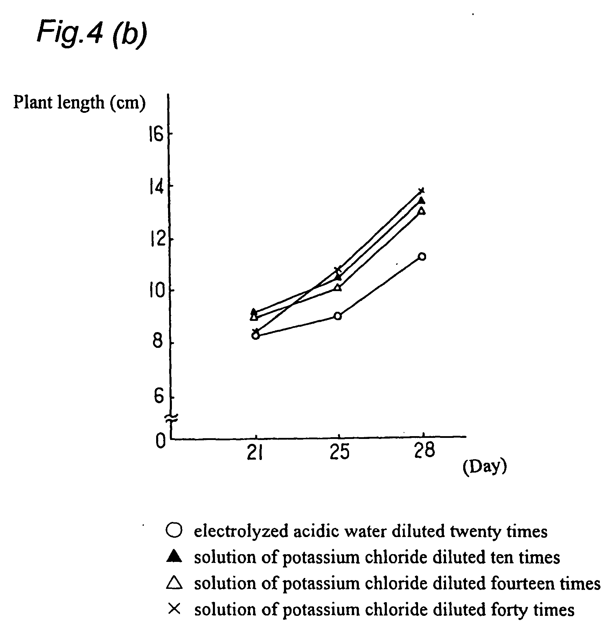

The culture solutions (1) - (5) were used to cultivate the tomatoes for twenty eight days in a condition described above. Thus, the stalk diameter, leaf length, leaf width and plant length of grown tomatoes were measured to confirm each growth transition of the tomatoes. A result of the measurement is shown in the following tables 8 - 11, and each growth transition of the tomatoes is shown in Figs. 3 and 4.

From the growth transition of the tomatoes, it has been confirmed that the culture solution prepared by the electrolyzed acidic water is effective more than a conventional culture solution prepared by the city service water to restrain the growth of the tomatoes.

**Table 8 Growing condition (Stalk diameter: mm)**

| Cultivation Days | Culture solution | | | | |
|---|---|---|---|---|---|
| | 1 | 2 | 3 | 4 | 5 |
| 21 | 4.38 | 3.95 | 4.22 | 4.08 | 4.22 |
| 25 | 4.84 | 3.92 | 4.46 | 4.80 | 5.15 |
| 28 | 5.40 | 4.78 | 5.45 | 5.55 | 5.83 |

**Table 9 Growing condition (Leaf length: cm)**

| Cultivation Days | Culture solution | | | | |
|---|---|---|---|---|---|
| | 1 | 2 | 3 | 4 | 5 |
| 21 | 13.71 | 12.13 | 12.58 | 11.92 | 14.33 |
| 25 | 16.44 | 13.21 | 16.45 | 16.63 | 19.17 |
| 28 | 19.12 | 17.67 | 20.17 | 20.33 | 23.83 |

**Table 10 Growing condition (Leaf width: cm)**

| Cultivation Days | Culture solution | | | | |
|---|---|---|---|---|---|
| | 1 | 2 | 3 | 4 | 5 |
| 21 | 10.55 | 9.04 | 9.83 | 9.63 | 10.71 |
| 25 | 13.12 | 9.58 | 12.50 | 13.08 | 14.58 |
| 28 | 15.38 | 13.00 | 15.17 | 16.33 | 19.17 |

**Table 11 Growing condition (Plant length: cm)**

| Cultivation Days | Culture solution | | | | |
|---|---|---|---|---|---|
| | 1 | 2 | 3 | 4 | 5 |
| 21 | 7.18 | 8.33 | 9.17 | 9.04 | 8.42 |
| 25 | 8.67 | 9.00 | 10.45 | 10.08 | 10.75 |
| 28 | 12.59 | 11.17 | 13.33 | 12.92 | 13.67 |

### Example 3

In a third experimental cultivation, the city service water (a), electrolyzed acidic water (b) diluted forty times with the city service water and solution of potassium chloride (c) diluted twenty times with the city service water were used to prepare culture solutions (1) - (3). The properties of the culture solutions (1) - (3) are shown in the following table 12.

**Table 12 Property of Culture solution**

| Property | Culture solution | | |
|---|---|---|---|
| | 1 | 2 | 3 |
| Solution for preparation | a | b | c |
| Conductivity (mS/cm) | 2.36 | 2.39 | 2.47 |
| pH | 5.49 | 5.03 | 5.51 |
| NH₄-N (ppm) | 30.2 | 28.6 | 29.6 |
| NO₃-N (ppm) | 221.7 | 206.7 | 212.4 |
| P₂O₅ (ppm) | 128.9 | 122.0 | 126.3 |
| K₂O (ppm) | 389.3 | 386.3 | 441.0 |
| CaO (ppm) | 235.5 | 230.3 | 230.6 |
| MgO (ppm) | 79.7 | 77.8 | 79.7 |
| MnO (ppm) | 2.20 | 2.10 | 2.17 |
| B₂O₃ (ppm) | 2.29 | 2.15 | 2.30 |
| Fe (ppm) | 2.56 | 2.44 | 2.40 |
| Cu (ppm) | 0.04 | 0.03 | 0.04 |
| Zn (ppm) | 0.11 | 0.10 | 0.10 |
| Mo (ppm) | 0.03 | 0.03 | 0.04 |
| Na (ppm) | 5.5 | 5.3 | 6.1 |
| Cl (ppm) | 5.5 | 19.6 | 29.3 |
| SO₄ (ppm) | 152.4 | 141.8 | 144.0 |

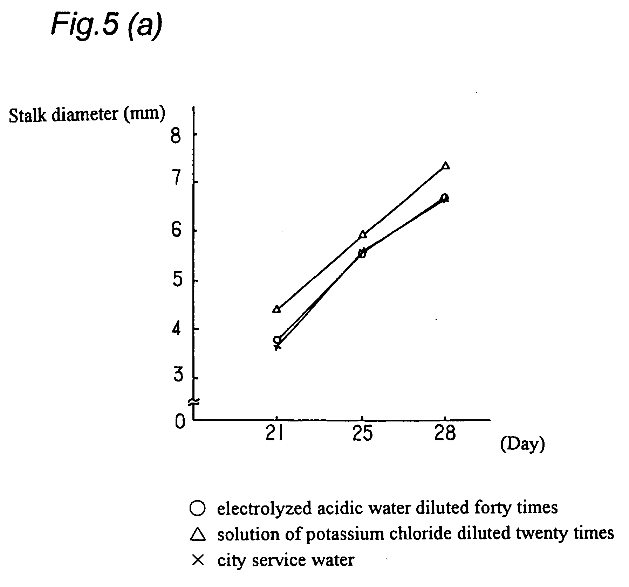

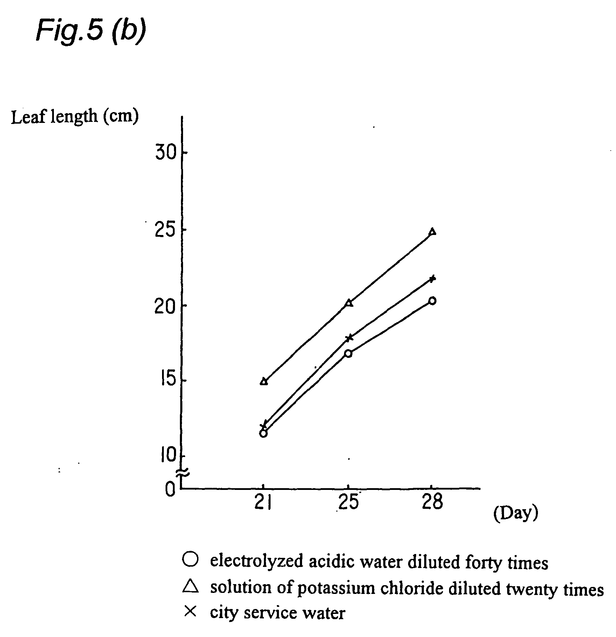

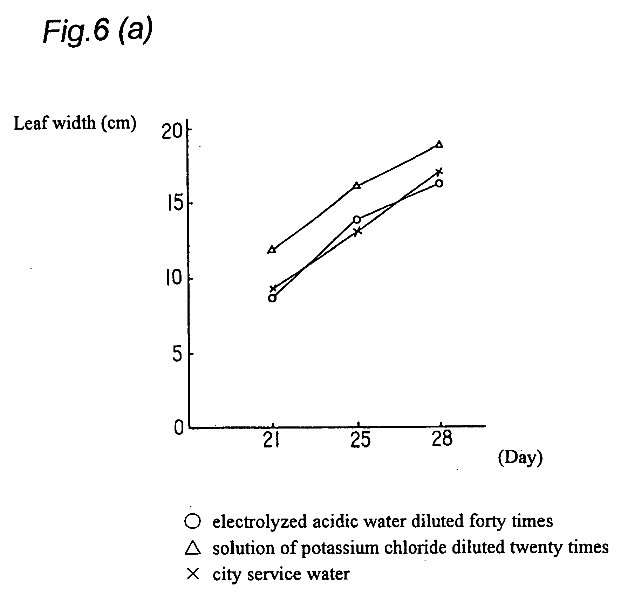

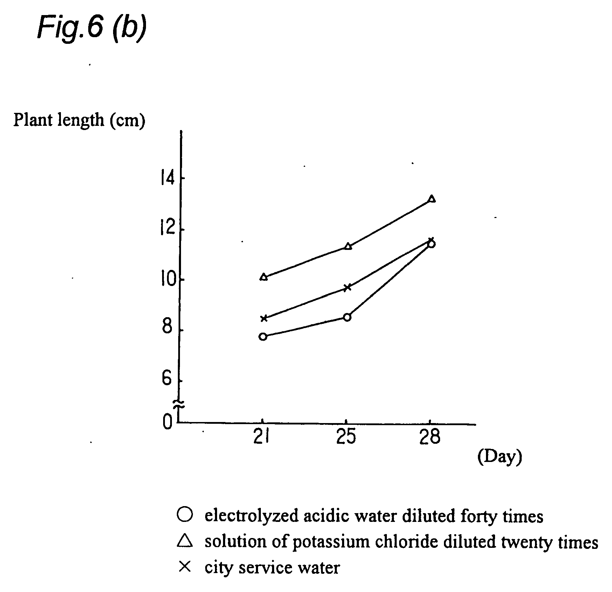

The culture solutions (1) - (3) were used to cultivate the tomatoes for twenty eight days in a condition described above. Thus, the stalk diameter, leaf length, leaf width and plant length of grown tomatoes were measured to confirm each growth transition of the tomatoes. A result of the measurement is shown in the following tables 13 - 16, and each growth transition of the tomatoes is shown in Figs.5 and 6.

From the growth transition of the tomatoes, it has been confirmed that the culture solution prepared by the electrolyzed acidic water is effective more than a conventional culture solution prepared by the city service water to restrain the growth of the tomatoes.

**Table 13 Growing condition (Stalk diameter: mm)**

| Cultivation Days | Culture solution | | |
|---|---|---|---|
| | 1 | 2 | 3 |
| 21 | 3.61 | 3.73 | 4.43 |
| 25 | 5.63 | 5.54 | 5.92 |
| 28 | 6.68 | 6.65 | 7.36 |

**Table 14 Growing condition (Leaf length: cm)**

| Cultivation Days | Culture solution | | |
|---|---|---|---|
| | 1 | 2 | 3 |
| 21 | 11.98 | 11.63 | 15.03 |
| 25 | 17.75 | 16.71 | 20.17 |
| 28 | 21.67 | 20.17 | 24.75 |

**Table 15 Growing condition (Leaf width: cm)**

| Cultivation Days | Culture solution | | |
|---|---|---|---|
| | 1 | 2 | 3 |
| 21 | 9.15 | 8.52 | 11.80 |
| 25 | 12.88 | 13.71 | 15.92 |
| 28 | 16.83 | 16.00 | 18.67 |

**Table 16 Growing condition (Plant length: cm)**

| Cultivation Days | Culture solution | | |
|---|---|---|---|
| | 1 | 2 | 3 |
| 21 | 8.44 | 7.78 | 10.14 |
| 25 | 9.67 | 8.58 | 11.24 |
| 28 | 11.58 | 11.50 | 13.17 |

## Claims

1. A culture solution for plant cultivation prepared by diluting fertilizer components effective for plant with electrolyzed water produced by electrolysis of solution of potassium chloride.

2. A culture solution as set forth in claim 1, wherein electrolyzed alkaline water produced by electrolysis of solution of potassium chloride is used for diluting the fertilizer components.

3. A culture solution as set forth in claim 2, wherein pH of the electrolyzed alkaline water is in an extent of 11.0 to 12.0.

4. A culture solution as set forth in claim 1, wherein electrolyzed acidic water produced by electrolysis of solution of potassium chloride is used for diluting the fertilizer components.

5. A culture solution as set forth in claim 4, wherein pH of the electrolyzed acidic water is in an extent of 2.0 to 3.0.

6. A preparation method of a culture solution for plant cultivation, comprising the step of diluting electrolyzed alkaline water produced by electrolysis of solution of potassium chloride with ordinary water six times to twenty times; and diluting fertilizer components effective for plant with the diluted electrolyzed alkaline water.

7. A preparation method of a culture solution for plant cultivation, comprising the steps of diluting electrolyzed acidic water produced by electrolysis of solution of potassium chloride with ordinary water twenty times to forty times, and diluting fertilizer components effective for plant with the diluted electrolyzed acidic water.

## Patentansprüche

1. Nährlösung für die Pflanzenzucht, die durch Verdünnen von Düngemittelkomponenten, die für eine Pflanze wirksam sind, mit elektrolysiertem Wasser, das durch eine Elektrolyse einer Lösung von Kaliumchlorid erzeugt worden ist, hergestellt worden ist.

2. Nährlösung nach Anspruch 1, bei der elektrolysiertes alkalisches Wasser, das durch eine Elektrolyse einer Lösung von Kaliumchlorid erzeugt worden ist, zum Verdünnen der Düngemittelkomponenten verwendet wird.

3. Nährlösung nach Anspruch 2, bei welcher der pH-Wert des elektrolysierten alkalischen Wassers in einem Bereich von 11,0 bis 12,0 liegt.

4. Nährlösung nach Anspruch 1, bei der elektrolysiertes saures Wasser, das durch eine Elektrolyse einer Lösung von Kaliumchlorid erzeugt worden ist, zum Verdünnen der Düngemittelkomponenten verwendet wird.

5. Nährlösung nach Anspruch 4, bei welcher der pH-Wert des elektrolysierten sauren Wassers in einem Bereich von 2,0 bis 3,0 liegt.

6. Verfahren zur Herstellung einer Nährlösung für die Pflanzenzucht, das die Schritte des sechs- bis zwanzigfachen Verdünnens von elektrolysiertem alkalischen Wasser, das durch eine Elektrolyse einer Lösung von Kaliumchlorid erzeugt worden ist, mit gewöhnlichem Wasser, und des Verdünnens von Düngemittelkomponenten, die für eine Pflanze wirksam sind, mit dem verdünnten elektrolysierten alkalischen Wasser umfasst.

7. Verfahren zur Herstellung einer Nährlösung für die Pflanzenzucht, das die Schritte des zwanzig- bis vierzigfachen Verdünnens von elektrolysiertem sauren Wasser, das durch eine Elektrolyse einer Lösung von Kaliumchlorid erzeugt worden ist, mit gewöhnlichem Wasser, und des Verdünnens von Düngemittelkomponenten, die für eine Pflanze wirksam sind, mit dem verdünnten elektrolysierten sauren Wasser umfasst.

## Revendications

1. Solution de culture pour la culture de plantes, préparée en diluant des composants fertilisants effectifs pour des plantes avec de l'eau électrolysée produite par électrolyse d'une solution de chlorure de potassium.

2. Solution de culture selon la revendication 1, dans laquelle de l'eau alcaline électrolysée produite par électrolyse d'une solution de chlorure de potassium est utilisée pour diluer les composants fertilisants.

3. Solution de culture selon la revendication 2, dans laquelle le pH de l'eau alcaline électrolysée est dans une fourchette de 11,0 à 12,0.

4. Solution de culture selon la revendication 1, dans laquelle de l'eau acide électrolysée produite par électrolyse d'une solution de chlorure de potassium est utilisée pour diluer les composants fertilisants.

5. Solution de culture selon la revendication 4, dans laquelle le pH de l'eau acide électrolysée est dans une fourchette de 2,0 à 3,0.

6. Procédé de préparation d'une solution de culture pour la culture de plantes, comprenant les étapes consistant à diluer de l'eau alcaline électrolysée produite par électrolyse d'une solution de chlorure de potassium avec de l'eau ordinaire à raison de 6 à 20 fois ; et à diluer des composants fertilisants effectifs pour des plantes avec l'eau alcaline électrolysée diluée.

7. Procédé de préparation d'une solution de culture pour la culture de plantes, comprenant les étapes consistant à diluer de l'eau acide électrolysée produite par électrolyse d'une solution de chlorure de potassium et avec de l'eau ordinaire à raison de 20 à 40 fois, et à diluer des composants fertilisants effectifs pour des plantes avec l'eau acide électrolysée diluée.
